# EUROPÄISCHE PATENTANMELDUNG

(11) **EP 0 959 125 A1**
(43) Veröffentlichungstag der Anmeldung: **24.11.1999**
(21) Anmeldenummer: 98116137.5
(22) Anmeldetag: 26.08.1998
(51) Int. Cl.: C11D 3/37, C11D 3/16, C09G 1/04

(54) **Reinigungs- Polier- und Konservierungsmittel**

(30) Priorität: 20.05.1998 DE 29809172 U
(71) Anmelder: Pingo-Erzeugnisse Welsch & Kuffner GmbH, 85748 Garching (DE)
(72) Erfinder: Stadelmann, Walter Dr., 85276 Pfaffenhofen a.d. Ilm (DE)
(74) Vertreter: Kern, Ralf M., Dipl.-Ing.

(57) **Zusammenfassung**

Die vorliegende Erfindung betrifft ein Reinigungs-, Polier- und Konservierungsmittel, das entmineralisiertes Wasser, ein oder mehrere Silikonöle, ein oder mehrere Polyacrylsäuren, ein oder mehrere Emulgatoren, ein oder mehrere organische Basen, sowie gegebenenfalls ein oder mehrere Antischaummittel und gegebenenfalls ein oder mehrere Konservierungsmittel umfaßt, wobei der Gehalt an entmineralisiertem Wasser wenigstens 90 Gew.-% beträgt.

## Beschreibung

Die vorliegende Erfindung betrifft ein Reinigungs-, Polier- und Konservierungsmittel, das entmineralisiertes Wasser, ein oder mehrere Silikonöle, ein oder mehrere Polyacrylsäuren, ein oder mehrere Emulgatoren, ein oder mehrere organische Basen, sowie gegebenenfalls ein oder mehrere Antischaummittel und gegebenenfalls ein oder mehrere Konservierungsmittel umfaßt, wobei der Gehalt an entmineralisiertem Wasser wenigstens 90 Gew.-% beträgt.

Das erfindungsgemäße Mittel wird insbesondere für die Reinigung und Pflege von lackierten, eloxierten und beschichteten Flächen verwendet. Insbesondere ist es für die Reinigung und Pflege von Fahrzeugkarosserien und Fassadenflächen aus eloxierten bzw. beschichteten Leichtmetallplatten geeignet.

Die derzeit übliche Praxis bei der Reinigung und Pflege der Lackoberfläche von Kraftfahrzeugkarosserien besteht aus mehreren Arbeitsgängen:
a) "Einweichen" mit Wasser, um die vorhandenen Schmutzteilchen wenigstens teilweise abzuspülen bzw. zu benetzen, um damit ein "Schmirgeln" auf der Lackoberfläche einigermaßen zu vermeiden,
b) eigentlicher Waschvorgang mit tensidhaltigen Waschflotten und
c) Nachspülen, gegebenenfalls mit Zusätzen, die den Glanz erhöhen, den Lack konservieren und das anschließende Trocknen durch einen Luftstrom erleichtern sollen (meist als "Heißwachs" o.ä. bezeichnet).

Diese Praxis ist mit mehreren gravierenden Nachteilen behaftet. Zur Reinigung und Pflege der Lackoberflächen sind mehrere Arbeitsgänge erforderlich. Dadurch ergibt sich ein hoher Wasserverbrauch. Weiter sind die entstehenden Abwässer stark mit Tensiden und Hilfsstoffen belastet. Außerdem erhält man nur eine unbefriedigende Lackkonservierung und Glanzgebung, so daß hierfür eine zusätzliche, aufwendige Behandlung mit Polituren oder Wachskonservierern von Hand oder mit einer Poliermaschine erforderlich ist.

Um insbesondere den enormen Wasserverbrauch bei dieser konventionellen Methode zu vermeiden, wurden Reinigungs- und Poliermittel beschrieben, die ohne vorherige Wäsche auf die verschmutzten Karosserien aufgetragen werden.

DE-OS-28 51 988 beschreibt Reinigungs- und Poliermittel bei denen es sich um Wachsemulsionen mit einem Zusatz von Silikonölen, Glykolen, Natriumpolyphoshaten und -silikaten und organischen Lösungsmitteln handelt. Nachteilig ist, daß sie, wie alle nur auf Wasser basierenden Wachsemulsionen, wegen deren ungleichmäßiger Verteilung auf der Lackoberfläche zur Flecken- und Streifenbildung neigen. Ihre konservierende und glanzgebende Wirkung ist wegen der leichten Anlösbarkeit solcher Wachsfilme durch Wasser sehr begrenzt. Außerdem haben Glykole die unerwünschte Eigenschaft, Lackquellungen hervorzurufen, so daß eine häufigere Anwendung problematisch ist. Psychologisch ist das Fehlen einer Spülung mit Wasser nachteilig, da der Fahrzeugbesitzer sich nicht vorstellen kann, eine Reinigung ohne Wasser zu erzielen, ohne das der Lack Schaden nimmt. Außerdem ist die Zugabe von organischen Lösemittel erforderlich, was ökologisch bedenklich ist.

In der DE-A-38 05 737 und der DE-A-38 05 738 werden Reinigungs- und Poliermittel auf Wasserbasis beschrieben, die aus Glanzmittel, Emulgatoren und Siedegrenzenbenzin bzw. Petroleum bestehen. Das Reinigungs- und Poliermittel gemäß DE-A-38 05 738, daß maximal 70 % Wasser beinhaltet, enthält außerdem nicht näher definierte Verdickungsmittel. Auch bei diesen beiden Reinigungs- und Poliermitteln ist der Zusatz von ökologisch bedenklichen organischen Lösungsmitteln zwingend erforderlich.

Daher hat sich der Erfinder die Aufgabe gestellt, ein Reinigungs-, Polier- und Konservierungsmittel bereitzustellen, daß die eingangs erwähnten Nachteile der derzeit üblichen Praxis und der vorstehend genannten Reinigungs- und Poliermitteln beispielsweise bei der Reinigung und Pflege der Lackoberfläche von Kraftfahrzeugkarosserien vermeidet. Insbesondere soll es die Anforderungen nach möglichst geringem Wasserverbrauch und einer minimalen Abwasserbelastung, zum Beispiel im Hinblick auf den Gehalt an Tensiden bzw. Emulgatoren und/oder organischen Lösungsmitteln erfüllen. Weiter soll es eine nachhaltige Konservierungs- und Glanzgebungswirkung, ohne Flecken- und Streifenbildung und ohne Lackangriff, aufweisen.

Es wurde festgestellt, daß die vorstehende Aufgabe gemäß der vorliegenden Erfindung überraschenderweise durch ein Reinigungs-, Polier- und Konservierungsmittel gelöst wird, das entmineralisiertes Wasser, ein oder mehrere Silikonöle, ein oder mehrere Polyacrylsäuren, ein oder mehrere Emulgatoren, ein oder mehrere organische Basen, sowie gegebenenfalls ein oder mehrere Antischaummittel und gegebenenfalls ein oder mehrere Konservierungsmittel umfaßt, wobei der Gehalt an entmineralisiertem Wasser wenigstens 90 Gew.-% beträgt.

Die vorstehend genannte Aufgabe wird insbesondere durch ein Reinigungs-, Polier- und Konservierungsmittel gelöst, das 94-96,5 Gew.-% entmineralisiertes Wasser, 1,5-5 Gew.-% eines oder mehrerer Silikonöle, 0,1-0,4 Gew.-% eines oder mehrerer Polyacrylsäuren, 0,5-0,9 Gew.-% eines oder mehrerer Emulgatoren, 0,14-0,22 Gew.-% eines oder mehrerer organischer Basen, 0-0,3 Gew.-% eines oder mehrerer Antischaummittel und 0-0,4 Gew.-% eines oder mehrerer Konservierungsmittel umfaßt.

Das erfindungsgemäße Reinigungs-, Polier- und Konservierungsmittel weist folgende Vorzüge auf:
1) Freiheit von organischen Lösemitteln, insbesondere von Kohlenwasserstoffen
2) Erhebliche Reduzierung des Wasserverbrauchs, beispielsweise bei der Anwendung in Waschstraßen und der Handwäsche
3) Minimale Abwasserbelastung infolge sehr geringer Konzentration der Inhaltsstoffe, wie beispielsweise den Emulgatoren
4) Hervorragende Glanzgebung und Konservierung bei minimalem Arbeitsaufwand, Verringerung der Anzahl erforderlicher Arbeitsgänge
5) Äußerst günstige und einfache Herstellung des erfindungsgemäßen Reinigungs-, Polier- und Konservierungsmittels.

Das erfindungsgemäße Mittel könnte auch mit Reinigungs- und Poliermittel oder Reinigungs- und Pflegemittel bezeichnet werden. Die zusätzliche Bezeichnung als Konservierungsmittel soll darauf hinweisen, daß das erfindungsgemäße Mittel die nach der Behandlung beispielsweise einer Lackfläche resultierende, einwandfrei saubere Lackoberfläche mit Hochglanz über einen überraschend langen Zeitraum konserviert.

Das erfindungsgemäße Reinigungs-, Polier- und Konservierungsmittel kann übliche, alle dem Fachmann bekannten Zusatzstoffe, wie z. B. organische Lösemittel oder ähnliches, für Reinigungs-, Polier- und Konservierungsmittel enthalten. Bevorzugt enthält das erfindungsgemäße Reinigungs-, Polier- und Konservierungsmittel aber keine weiteren Zusatzstoffe und besteht nur aus den vorstehend aufgeführten Komponenten. Insbesondere ist das erfindungsgemäße Reinigungs-, Polier- und Konservierungsmittel vorzugsweise frei, besonders bevorzugt absolut frei, von organischen Lösemitteln, insbesondere von Kohlenwasserstoffen.

In einer bevorzugten Ausführungsform besteht das erfindungsgemäße Reinigungs-, Polier- und Konservierungsmittel daher nur aus entmineralisiertem Wasser, einem oder mehrerer Silikonölen, einer oder mehrerer Polyacrylsäuren, einem oder mehreren Emulgatoren, einer oder mehrerer organischer Basen, gegebenenfalls einem oder mehrerer Antischaummitteln und gegebenenfalls einem oder mehrerer Konservierungsmitteln und ist ansonsten frei von anderen Zusatzstoffen.

In dem erfindungsgemäßen Reinigungs-, Polier- und Konservierungsmittel sind wenigstens 90 Gew.-%, bevorzugt 94-96,5 Gew.-%, entmineralisiertes Wasser enthalten.

Es wird entmineralisiertes Wasser eingesetzt, da es sonst zu einer Verminderung der Emulsionsstabilität käme. Der Ionengehalt des Wassers muß so gering sein, daß eine ausreichende Emulsionsstabilität erreicht wird. Es kann das technisch übliche entmineralisierte Wasser verwendet werden.

In dem erfindungsgemäßen Reinigungs-, Polier- und Konservierungsmittel sind bevorzugt 1,5 bis 5 Gew.-%, besonders bevorzugt 2 bis 5 Gew.-% und noch bevorzugter 3 bis 4 Gew.-% Silikonöl enthalten.

Bei den eingesetzten Silikonölen (Polysiloxane) kann es sich um lineare, verzweigte oder cyclische Silikonöle handeln. Die Kohlenwasserstoffreste des Silikonöls sind beispielsweise Methyl, Ethyl, Propyl oder Phenyl oder Mischungen davon, wobei Methyl bevorzugt ist. Bevorzugt werden lineare Silikonöle eingesetzt.

Die bevorzugten linearen Silikonöle weisen den Bautyp R₃SiO[R₂SiO]ₙSiR₃ (R = Methyl, Ethyl, Propyl oder Phenyl oder Mischungen davon, n = Anzahl der Wiederholungseinheiten) auf. Das bevorzugte Silikonöl ist lineares Polydimethylsiloxan (R = Methyl).

Prinzipiell können auch Silikonöle mit funktionellen Gruppen eingesetzt werden, der Einsatz von aminofunktionellen Silikonölen, die sonst in Lackpflegemitteln wegen ihrer erhöhten Detergenzienfestigkeit eine breite Verwendung finden, verbietet sich aber hier, da die Säuregruppen der Polyacrylsäuren mit den Aminogruppen reagieren, was zu Ausfällungen führt.

Sind die Silikonöle zu hoch viskos, sind die Mittel schlecht auspolierbar. Daher sollten möglichst niedrig viskose eingesetzt werden. Die Silikonöle besitzen daher bevorzugt eine Viskosität von 200 bis 500 mPa.s (25°C), besonders bevorzugt von 300 bis 400 mPa.s (25°C). Es können Mischungen von Silikonölen oder bevorzugt nur ein Silikonöl eingesetzt werden.

In dem erfindungsgemäßen Reinigungs-, Polier- und Konservierungsmittel sind bevorzugt 0,1 bis 0,4 Gew.-%, besonders bevorzugt 0,1 bis 0,2 Gew.-% Polyacrylsäure enthalten.

Die Polyacrylsäure oder die Polyacrylsäuren sind Polymerisate und/oder Copolymerisate der Acrylsäure und/oder der Methacrylsäure. Es kann sich auch um vernetzte Acrylsäure-Polymerisate und/oder -Copolymerisate oder um vernetzte Methacrylsäure-Polymerisate und/oder - Copolymerisate handeln. Geeignete Comonomere sind z. B. Polyallylglucosen, Maleinsäureanhydrid, N-Methylacrylamid, Methylvinylether oder Mischungen solcher zusätzlichen Monomere. Die Polyacrylsäuren werden bevorzugt in ihrer Säureform eingesetzt. Die Polyacrylsäuren können allein oder als Mischung eingesetzt werden.

Die Polyacrylsäuren können wasserlöslich sein oder, insbesondere wenn sie vernetzt sind, in Wasser quellen. Die Polyacrylsäuren können als Festkörper, wäßrige Lösung oder Emulsion eingesetzt werden. Bevorzugt werden sie als Festkörper eingesetzt. Werden sie in Form einer wäßrigen Lösung oder Emulsion in entmineralisiertem Wasser eingesetzt, wird das darin befindliche entmineralisierte Wasser dem Gewichtsgehalt des entmineralisierten Wassers zugerechnet.

Bevorzugt werden Acrylsäurepolymerisate eingesetzt, die unter der Bezeichnung CARBOPOL^{R} (der Firma Goodrich), beispielsweise CARBOPOL^{R} 940, CARBOPOL^{R} 934 und CARBOPOL^{R} 941, im Handel erhältlich sind. Dabei handelt es sich um wasserlösliche Pulver. Neue CARBOPOL^{R} -Produkte zeigen bei sonst gleichen Eigenschaften eine verbesserte Wasserlöslichkeit. Ihr Einsatz ist bevorzugt.

Die Polyacrylsäuren weisen bevorzugt ein hohes mittleres Molekulargewicht auf, beispielweise ein mittleres Molekulargewicht von über 500 000, bevorzugt von 1 000 000 bis 5 000 000, besonders bevorzugt von 2 000 000 bis 4 000 000.

In dem erfindungsgemäßen Reinigungs-, Polier- und Konservierungsmittel sind bevorzugt 0,5 bis 0,9 Gew.-%, besonders bevorzugt 0,55 bis 0,70 Gew.-% Emulgator enthalten.

Emulgatoren sind polare, chemische Verbindungen, die an der Bildung und Stabilisierung einer Emulsion wesentlich beteiligt sind. Grundsätzlich können alle Tenside als Emulgator in Betracht kommen.

Bei den erfindungsgemäß eingesetzten Tensiden kann es sich um anionische, kationische, nichtionische, Tenside mit hydrophoben Resten die keine Kohlenwasserstoffe sind, oder ampholytische Tenside handeln. Bevorzugt werden nichtionische Tenside eingesetzt.

Bei den anionischen Tensiden handelt es sich beispielsweise um die dem Fachmann bekannten Carboxylate wie Seifen, anionische Derivate der Fettsäuren oder Fettalkylethercarboxylate, um sulfierte Fette und Öle, Sulfofettsäuremethylester, Alkylsulfate, Fettalkylsulfate, Fettalkylethersulfate, Alkylphosphate, Alkyletherphosphate, Alkylbenzolsulfonate, Petroleumsulfonate, Olefinsulfonate, Alkansulfonate, Sulfobernsteinsäureester oder Ligninsulfonate.

Bei den kationischen Tensiden handelt es sich beispielsweise um die dem Fachmann bekannten Tetraalkylammoniumsalze, Imidazoliniumsalze oder Aminoxide.

Bei den Tensiden mit hydrophoben Resten, die keine Kohlenwasserstoffe sind, handelt es sich beispielsweise um die dem Fachmann bekannten Fluor- oder Silicontenside.

Bei den bevorzugt eingesetzten nichtionischen Tensiden handelt es sich beispielsweise um die dem Fachmann bekannten Oxethylate wie Alkoholoxethylate, Fettalkoholoxethylate bzw. Fettalkoholpolyglykolether, Alkylphenoloxethylate, schwach schäumende Oxethylate, Fettsäureoxethylate, Fettsäurepolyglykolester, Fettsäurealkanolamide oder Fettaminoxethylate, oder um Polyhydroxyverbindungen wie Fettsäureglyceride, Sorbitanester oder Alkylpolyglycoside.

Nähere Einzelheiten zur Struktur, Herstellung und den Eigenschaften der genannten Tenside wird in Kosswig/Stacke (Hrsg.), Die Tenside, Carl Hanser Verlag München Wien, 1993, S. 115-171 beschrieben, worauf hiermit ausdrücklich Bezug genommen wird.

Bei den bevorzugten nichtionischen Tensiden wird bevorzugt ein Fettalkoholpolyglykolether, noch bevorzugter ein Gemisch aus Fettalkoholpolyglykolethern als Emulgator eingesetzt. Die Fettalkoholpolyglykolethern (= Fettalkoholalkoxylate, bevorzugt Fettalkoholethoxylate) werden beispielsweise durch Alkoxylierung, vorzugsweise jedoch Ethoxylierung, von primären Fett- bzw. Oxoalkoholen als Gemisch aus Fettalkoholpolyglykolethern unterschiedlich hoch alkoxylierter, bevorzugt ethoxylierter, Homologer gewonnen. Bei den Fettalkoholen handelt es sich beispielsweise um durch Reduktion von Triglyceriden, Fettsäuren bzw. Fettsäuremethylester erhältliche lineare gesättigte oder ungesättigte primäre Alkohole mit 6 bis 22 Kohlenstoffatomen.

Eine Kennzahl zur Charakterisierung von Emulgatoren ist der HLB-Wert (Hydrophil-Lipophil-Balance) (zur Bestimmung siehe z. B. Kosswig/Stacke (Hrsg.), Die Tenside, Carl Hanser Verlag München Wien, 1993, S. 228-233). Jedem Emulgator wird eine dimensionslose Zahl zwischen 0 und 20 zugeordnet, die angibt ob eine bevorzugte Wasser- oder Öllöslichkeit vorliegt. Er bezeichnet das Verhältnis von hydrophilen zu hydrophoben Anteilen im Emulgator und gibt das Verhältnis der Löslichkeit des Emulgators in Wasser bzw. Öl an. Der erfindungsgemäß eingesetzte Emulgator besitzt bevorzugt einen HLB-Wert von 8 bis 12. Ein besonders günstiger HLB-Wert für den Emulgator ist beispielsweise 10.

Die organische Base dient zur Erhöhung der Konsistenz bzw. der Viskosität des erfindungsgemäßen Reinigungs-, Polier- und Konservierungsmittels. Die organische Base wird dabei in derartigen Mengen zugegeben, daß die gewünschte Konsistenz erhalten wird. Dem Fachmann sind die für den gewünschten Anwendungszweck erforderlichen Konsistenzen bekannt und er kann die hierfür notwendige Menge an organischer Base leicht feststellen. Ein erhöhter Zusatz von Basen ist wegen der negativen Wirkung von basischen Lösungen auf lackierten Oberflächen zu vermeiden.

Im erfindungsgemäßen Reinigungs-, Polier- und Konservierungsmittel werden bevorzugt 0,14 bis 0,22 Gew.-%, besonders bevorzugt 0,15 bis 0,18 Gew.-% organische Base eingesetzt.

Es können prinzipiell alle organische Basen oder Mischungen davon eingesetzt werden. Als Beispiele für erfindungsgemäß einsetzbare organische Basen seien Morpholin, Monoethanolamin, Diethanolamin und Triethanolamin genannt. Bevorzugt wird Diethanolamin als organische Base eingesetzt.

Antischaummittel sind nicht zwingend erforderlich, da es aber die Schaumbildung der Emulgatoren dämpft, wird sein Einsatz bevorzugt. Es können alle dem Fachmann bekannten Antischaummittel eingesetzt werden. Beispiele für Antischaummittel sind langkettige Seifen wie Natriumbehenat, Entschäumer auf Siliconbasis (Silikonentschäumer), z. B. ölige, pastöse oder wäßrig emulgierte Silikonpräparate (gewöhnlich Polydimethylsiloxane), Polyethylen/Polypropylenglykolether oder Mischether. Wäßrig emulgierte Silikonpräparate werden auch als Silikonölantischaumemulsionen bezeichnet. Die Antischaummittel können allein oder in Mischung eingesetzt werden.

Bevorzugt werden Silikonölantischaumemulsionen aus Silikonölen in Wasser oder entmineralisiertem Wasser als Antischaummittel eingesetzt. Dabei handelt es sich um übliche im Handel erhältliche Produkte. Beispielsweise enthalten diese Silikonölantischaumemulsionen 3 bis 50 Gew.-% Silikonöl. Die Silikonölantischaumemulsion wird bei der Gewichtsabmessung als ganzes mit dem darin enthaltenen Wasser oder entmineralisierten Wasser dem Antischaummittel zugerechnet. Die Silikonölantischaumemulsionen können geringe Mengen feinteiliger Füllstoffe, z. B. pyrogene Kieselsäure, enthalten.

Wegen ihrer guten Wirkung braucht man bei Bedarf nur geringe Mengen des Antischaummittels. Üblicherweise sind in dem erfindungsgemäßen Reinigungs-, Polier- und Konservierungsmittel 0-0,3 Gew.-%, bevorzugt 0,1-0,3 Gew.-%, besonders bevorzugt 0,1-0,2 Gew.-% Antischaummittel enthalten.

Konservierungsmittel werden Emulsionen zugesetzt, um den Befall von Bakterien und Pilzen entgegenzuwirken. Auch ein Konservierungsmittel ist nicht zwingend erforderlich, da es das erfindungsgemäße Reinigungs-, Polier- und Konservierungsmittel aber vor mikrobiellem Verfall schützt und die Lagerfähigkeit verbessert, ist sein Einsatz wünschenswert.

Die Menge an eingesetztem Konservierungsmittel richtet sich nach der Art des Konservierungsmittels. Die Dosierung für das jeweilige Konservierungsmittel ist dem Fachmann bekannt. In dem erfindungsgemäßen Reinigungs-, Polier- und Konservierungsmittel können 0-0,4 Gew.-%, bevorzugt 0,05 bis 0,25 Gew.-% Konservierungsmittel enthalten sein. Besonders bevorzugt werden beispielsweise 0,2 Gew.-% Konservierungsmittel verwendet.

Es können alle dem Fachmann bekannten Konservierungsmittel eingesetzt werden. Beispiele für Konservierungsmittel sind Aldehyde wie Formaldehyd oder Chloralhydrat, Aldehydspender, Phenolderivate wie o-Phenylphenol oder p-Chlor-m-kresol, heterocyclische Verbindungen wie o-Chloranilinodichlortriazin, Isothiazolinonderivate oder Derivate des 1,2-Benzoisothiazolons, oder in physiologisch unbedenklichen Fällen Pentachlorphenol oder seine Fettsäureester. Erfindungsgemäß werden Isothiazolinonderivate bevorzugt als Konservierungsmittel eingesetzt.

Für das Verfahren zur Herstellung des erfindungsgemäßen Reinigungs-, Polier- und Konservierungsmittels gibt es keine Besonderheiten. Die Komponenten des erfindungsgemäßen Reinigungs-, Polier- und Konservierungsmittels können in beliebiger Weise beispielsweise bei Raumtemperatur oder erhöhter Temperatur miteinander vermischt werden.

Beispielsweise können Polyacrylsäuren, die schon in sehr geringen Konzentrationen in Wasser gelöst, relativ hochviskose Lösungen bilden, in entmineralisiertem Wasser gelöst werden. Anschließend werden zu dieser Lösung unter einfachem Rühren Silikonöle mit einer relativ niedrigen Viskosität, z. B. vom Typ der linearen Polydimethylsiloxane, unter Zusatz einer geringen Menge Emulgator eingearbeitet. Es entstehen auf diese Weise gelartige Öl-in-Wasser-Emulsionen von fast transparentem Aussehen, deren Viskosität und Stabilität durch Zusatz geringer Mengen einer organischen Base, z. B. Diethanolamin, am Ende des Emulgiervorgangs erheblich gesteigert werden können.

Bevorzugt wird daher zunächst die Polyacrylsäure, beispielsweise in Pulverform, in entmineraliertem Wasser gelöst. Zu dieser Lösung wird langsam ein Gemisch Siliconöl/Emulgator zugegeben. Das Siliconöl/Emulgator-Gemisch enthält zweckmäßigerweise das gegebenenfalls eingesetzte Antischaummittel. Anschließend wird die organische Base in einer solchen Menge zugegeben, daß die gewünschte Viskosität erreicht wird. Bevorzugt wird auch das Konservierungsmittel an beliebiger Stelle zugegeben. Auch andere Zusatzstoffe können zugegeben werden, bevorzugt werden aber keine weiteren Zusatzstoffe zugegeben.

Eine solche bevorzugt rein wäßrige, durch die Polyacrylsäure stabilisierte Silikonölemulsion mit sehr geringer Teilchengröße der Silikontröpfchen liefert, auf eine Lackoberfläche aufgetragen oder -gesprüht, nach anschließendem leichten Auspolieren bzw. Abwaschen beispielsweise in einer Waschstraße einen gleichmäßigen flecken- und streifenfreien Film von hohem Glanz mit stark wasserabweisenden und konservierenden Eigenschaften.

Die Konfektionierung des Mittels ist ebenso denkbar einfach wie umweltfreundlich: Es kann beispielsweise in übliche Kunststoffflaschen, die bevorzugt einen üblichen Sprühverschluß aufweisen, oder in die bei den Waschanlagen für Fahrzeuge vorgesehenen Behälter für die Reinigungslösung abgefüllt werden.

Das erfindungsgemäße Reinigungs-, Polier- und Konservierungsmittel wird insbesondere für die Reinigung und Pflege von Flächen, insbesondere von oberflächenbehandelten Flächen, verwendet. Beispiele für oberflächenbehandelte Flächen sind patinisierte, galvanisierte, lackierte, eloxierte oder beschichtete Flächen oder durch Anlassen behandelte Oberflächen (eine Temperaturbehandlung der Oberfläche). Das erfindungsgemäße Reinigungs-, Polier- und Konservierungsmittel wird bevorzugt für die Reinigung und Pflege von lackierten, eloxierten und beschichteten Flächen verwendet. Die Flächen können aus jedem erdenklichen Material, beispielsweise Metall, Leichtmetall, Kunststoff, Glas oder Keramik bestehen. Insbesondere ist es für die Reinigung und Pflege von lackierten Fahrzeugkarosserien und Gebäudefassaden aus eloxierten oder beschichteten Leichtmetallplatten geeignet.

Die Anwendung des erfindungsgemäßen Reinigungs-, Polier- und Konservierungsmittels ist ebenfalls denkbar einfach. Zunächst wird es auf die zu reinigende Fläche aufgebracht. Dies ist auf jede erdenkliche Weise möglich, bevorzugt wird das erfindungsgemäßen Reinigungs-, Polier- und Konservierungsmittel aber durch Sprühen auf die Fläche aufgebracht. Anschließend wird die Fläche mit Wasser abgespült oder z. B. mit einem Lappen auspoliert und gegebenenfalls getrocknet.

Es entstehen einwandfrei saubere, wasserabweisende, und gleichmäßig flecken- und streifenfreie Oberflächen. Lackoberflächen werden hochglänzend und zeigen eine mehrere Wochen anhaltende Konservierung. Bei mehrmaliger Wiederholung dieser Behandlung nimmt die Glanzfestigkeit und Konservierungswirkung mehr und mehr zu. Dabei werden Schmutzteilchen offensichtlich umhüllt und leicht abgelöst. Die frappierende Wirkung des erfindungsgemäßen Mittels ist offenbar auf einen Synergieeffekt zwischen der Polyacrylsäure und dem Silikonöl, sowie gegebenenfalls dem Emulgator zurückzuführen.

Umfangreiche Praxisversuche mit Kraftfahrzeugen mit lackierten Oberflächen haben die überraschenden Wirkungen bei der Anwendung des erfindungsgemäßen Mittels erwiesen:

### Beispiel 1

Ein Kraftfahrzeug wurde mit Hilfe eines herkömmlichen Waschsystems gereinigt. Hierfür wurden folgende Schritte ausgeführt:
A) Vorreinigung des Fahrzeugs mit Wasser,
B) Reinigung mit üblichen tensidhaltigen Waschflotten (Shampoolösung), und
C) Abwaschen der tensidhaltigen Waschflotten mit Wasser, das einen üblichen Heißwachs enthält, der den Glanz erhöhen, den Lack konservieren und das anschließende Trocknen durch einen Luftstrom erleichtern soll.

Es werden pro Fahrzeug insgesamt etwa 250 l Wasser und für Schritt B) etwa 100 ml Shampoolösung mit ca. 10-15 Gew.-% Emulgator bzw. Tensid verbraucht. Man erhält eine saubere Lackoberfläche. Die Lackkonservierung und Glanzgebung ist unbefriedigend, so daß hierfür eine zusätzliche Behandlung mit Polituren oder Wachskonservierern von Hand oder mit einer Poliermaschine erforderlich wären.

### Beispiel 2

Ein Kraftfahrzeug wurde mit einem erfindungsgemäßen Reinigungs-, Polier- und Konservierungsmittel gereinigt. Hierfür wurden folgende Schritte ausgeführt:
A) Besprühen des Fahrzeugs mit einem erfindungsgemäßen Reinigungs-, Polier- und Konservierungsmittel mit ca. 0,55 Gew.-% Emulgator, der frei von organischen Lösemitteln ist, und
B) Abspülen mit Wasser

Es ist nur ein Waschgang notwendig, die Vorreinigung mit Wasser und auch ein zusätzlicher Polierschritt entfällt. Es werden pro Fahrzeug insgesamt etwa 50 bis 100 l Wasser verbraucht, das entspricht einer Reduktion des Wasserverbrauchs um etwa das 2 bis 5fache. Für Schritt A) wurden etwa 70 ml des erfindungsgemäßen Mittels, das etwa 0,55 Gew.-% Emulgator (bzw. Tensid) enthielt, verbraucht. Das entspricht etwa einer 100fachen Reduzierung der Emulgator/Tensidbelastung.

Es entsteht eine einwandfrei saubere, gleichmäßig flecken- und streifenfreie und wasserabweisende Lackoberfläche mit Hochglanz und mehrere Wochen anhaltender Konservierung. Eine nachträgliche Behandlung mit einem Poliermittel ist nicht mehr notwendig. Bei mehrmaliger Wiederholung dieser Behandlung nimmt die Glanzfestigkeit und Konservierungswirkung mehr und mehr zu.

## Patentansprüche

1. Reinigungs-, Polier- und Konservierungsmittel für lackierte, eloxierte und beschichtete Flächen, das entmineralisiertes Wasser, ein oder mehrere Silikonöle, ein oder mehrere Polyacrylsäuren, ein oder mehrere Emulgatoren, ein oder mehrere organische Basen, sowie gegebenenfalls ein oder mehrere Antischaummittel und gegebenenfalls ein oder mehrere Konservierungsmittel umfaßt, wobei der Gehalt an entmineralisiertem Wasser wenigstens 90 Gew.-% beträgt.

2. Reinigungs-, Polier- und Konservierungsmittel nach Anspruch 1, das
A) 94-96,5 Gew.-% entmineralisiertes Wasser
B) 1,5-5 Gew.-% eines oder mehrerer Silikonöle
C) 0,1-0,4 Gew.-% eines oder mehrerer Polyacrylsäuren
D) 0,5-0,9 Gew.-% eines oder mehrerer Emulgatoren
E) 0,14-0,22 Gew.-% eines oder mehrerer organischer Basen
F) 0-0,3 Gew.-% eines oder mehrerer Antischaummittel, und
G) 0-0,4 Gew.-% eines oder mehrerer Konservierungsmittel
umfaßt.

3. Reinigungs-, Polier- und Konservierungsmittel nach Anspruch 1 oder 2, das frei von organischen Lösemitteln, insbesondere von Kohlenwasserstoffen ist.

4. Reinigungs-, Polier- und Konservierungsmittel nach einem der Ansprüche 1 bis 3, wobei das Silikonöl ein lineares Polydimethylsiloxan mit einer Viskosität von 200 bis 500 mPa.s (25°C) ist.

5. Reinigungs-, Polier- und Konservierungsmittel nach einem der Ansprüche 1 bis 4, wobei die organische Base Diethanolamin ist.

6. Reinigungs-, Polier- und Konservierungsmittel nach einem der Ansprüche 1 bis 5, wobei das Antischaummittel eine Silikonölantischaumemulsion ist.

7. Reinigungs-, Polier- und Konservierungsmittel nach einem der Ansprüche 1 bis 6, wobei der Emulgator ein Gemisch aus Fettalkoholpolyglykolethern ist.

8. Reinigungs-, Polier- und Konservierungsmittel nach einem der Ansprüche 1 bis 7, wobei das Konservierungsmittel ein Isothiazolinonderivat ist.

9. Verwendung des Reinigungs-, Polier- und Konservierungsmittels nach einem der Ansprüche 1 bis 8 für die Reinigung und Pflege von lackierten, eloxierten und beschichteten Flächen.

10. Verwendung des Reinigungs-, Polier- und Konservierungsmittels nach Anspruch 8, wobei die Fläche aus Metall, Leichtmetall, Kunststoff, Glas oder Keramik besteht.

11. Verwendung des Reinigungs-, Polier- und Konservierungsmittels nach Anspruch 8 oder 9 für die Reinigung und Pflege von Kraftfahrzeugkarosserien und Gebäudefassaden aus eloxierten oder beschichteten Leichtmetallplatten.
